(19) Europäisches Patentamt
European Patent Office
Office européen des brevets

(11) EP 0 988 340 B1

(12) EUROPÄISCHE PATENTSCHRIFT

(45) Veröffentlichungstag und Bekanntmachung des Hinweises auf die Patenterteilung:
**21.11.2001 Patentblatt 2001/47**

(21) Anmeldenummer: **98929392.3**

(22) Anmeldetag: **28.05.1998**

(51) Int Cl.[7]: **C08K 5/54**, C08K 5/3475, C09D 183/04, C08J 7/04

(86) Internationale Anmeldenummer:
**PCT/EP98/03157**

(87) Internationale Veröffentlichungsnummer:
**WO 98/56853 (17.12.1998 Gazette 1998/50)**

(54) **UV-STABILISATOREN FÜR SILOXAN-SYSTEME**
UV-STABILIZERS FOR SILOXANE SYSTEMS
AGENTS ANTI U.V. POUR SYSTEMES A BASE DE SILOXANE

(84) Benannte Vertragsstaaten:
**BE DE DK ES FR GB IT NL**

(30) Priorität: **10.06.1997 DE 19724397**

(43) Veröffentlichungstag der Anmeldung:
**29.03.2000 Patentblatt 2000/13**

(73) Patentinhaber: **Bayer Aktiengesellschaft**
**51368 Leverkusen (DE)**

(72) Erfinder: **BIER, Peter**
**D-47800 Krefeld (DE)**

(56) Entgegenhaltungen:
**EP-A- 0 732 361** **DE-A- 2 810 072**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 988 340 B1

Printed by Jouve, 75001 PARIS (FR)

## Beschreibung

Die vorliegende Erfindung betrifft nicht-flüchtige UV-stabilisierende Mischungen für Siloxan-Lacksysteme, deren UV-stabilisierende Wirkstruktur bestimmte Hydroxybenztriazole sind und die daher besonders für die UV-Stabilisierung von Thermoplasten insbesondere von aromatischen Polycarbonaten geeignet sind.

Um Materialien vor schädlichen Umwelteinflüssen zu schützen, werden diese häufig mit einer schützenden Oberfläche versehen. Als besonders geeignet haben sich dabei Lacke auf Siloxanbasis erwiesen, die den Materialien u.a. eine kratzfeste Oberfläche verleihen.

Diese Lacke können sogenannte UV-stabilisierende Substanzen enthalten, um den Lack selbst und das darunterliegende Material, das sogenannte Substrat, gegen schädliche UV-Strahlen zu schützen. Neben einem über eine lange Zeit wirkenden UV-Schutz wird von diesen Substanzen unter anderem gefordert, daß sie nicht flüchtig sind, so daß sie in der Lackschicht homogen verteilt bleiben und weder beim Aushärten noch beim späteren Einsatz des Lackes aus der Lackschicht austreten. Ferner dürfen sich die UV-stabilisierenden Substanzen nicht schnell zersetzen, müssen sich mit den Lacken dauerhaft homogen mischen und der die UV-stabilisierende Substanzen enthaltende Lack sollte transparent sein.

Die US-A 4 278 804 und die US-A 4 051 161 beziehen sich auf UV-stabilisierende Wirksubstanzen und Lacke, die diese enthalten. Die dort offenbarten Substanzen haben jedoch den Nachteil, daß ihr UV-Schutz unzureichend ist, daß sie sich zu schnell zersetzen und/oder daß das die Stabilisatoren enthaltende Siloxan-System gelbstichig ist.

Aus der US-A5 438 142 ist ferner die UV-stabilisierende Wirksubstanz, 1-(3'-(Benzotriazol-2''-yl)-4'-hydroxyphenyl)-1,1-bis(4-hydroxyphenyl)ethan bekannt.

Diese Wirksubstanz hat jedoch den Nachteil, dass sie sich mit Lacken auf Siloxanbasis nicht dauerhaft mischen lässt.

Es stellt sich deshalb die Aufgabe, ein UV-Stabilisatorsystem zur Verfügung zu stellen, das die oben geschilderten Nachteile nicht aufweist.

Die Aufgabe wird erfindungsgemäß durch die Bereitstellung von UV-stabilisierenden Mischungen gelöst, enthaltend Hydroxybenztriazole der nachstehenden allgemeinen Formel (1) und Epoxidgruppen enthaltende, hydrolysierbare Silane.

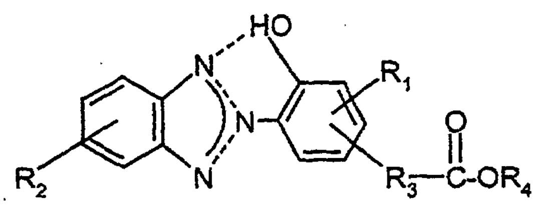

(1)

$R_1$: H, $C_1$-$C_{18}$-Alkyl, $C_5$-$C_6$-Cycloalkyl oder $C_6$-$C_{12}$-Aryl,

$R_2$: H, Halogen, vorzugsweise Cl oder $C_1$-$C_{12}$-Alkyl,

$R_3$: eine Einfachbindung, $C_1$-$C_{12}$-Alkylen, $C_5$-$C_6$-Cycloalkylen oder Phenylen,

$R_4$: H, Alkalimetall, Ammonium, Erdalkalimetall, $C_1$-$C_{12}$-Alkyl,

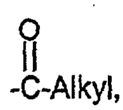 $C_6$-$C_{12}$-Aryl oder 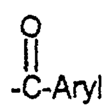

Gegenstand der vorliegenden Erfindung sind ferner UV-stabilisierende Mischungen mit einem molaren Verhältnis von Epoxidgruppen des Silanes zum Hydroxybenztriazol der allgemeinen Formel (1), das größer als 1,4, vorzugsweise größer als 2, besonders bevorzugt größer als 8 ist. Das molare Verhältnis von Epoxid-Einheit des Silanes zum Hydroxybenztriazol der allgemeinen Formel (1) sollte jedoch 100:1 nicht überschreiten.

Die erfindungsgemäßen Mischungen sind zur UV-Stabilisierung von Siloxan-Systemen, insbesondere von kratz- und abriebfesten Siloxanbeschichtungsmaterialien geeignet. Solche UV-stabilisierten Beschichtungsmaterialien, vorzugsweise Lacke, können zur Beschichtung von Materialien aller Art wie z.B. Holz, Textilien, Papier, Steinwaren,

vorzugsweise jedoch zur Beschichtung von Kunststoffen, Metallen, Glas und Keramik, besonders bevorzugt zur Beschichtung von Thermoplasten und ganz besonders bevorzugt zur Beschichtung von Polycarbonaten verwendet werden.

Die für die erfindungsgemäßen nicht flüchtigen UV-stabilisierenden Mischungen verwendeten Hydroxybenztriazole sind Verbindungen der allgemeinen Formel (1)

Bevorzugte Verbindungen der Formel (1) sind:

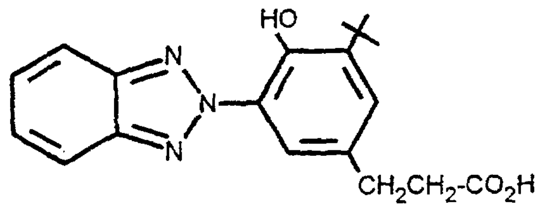

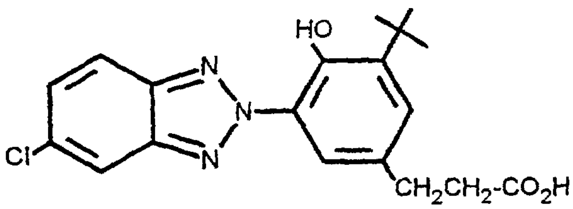

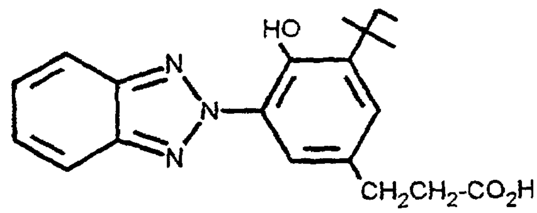

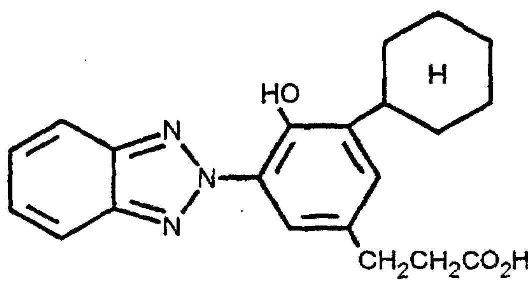

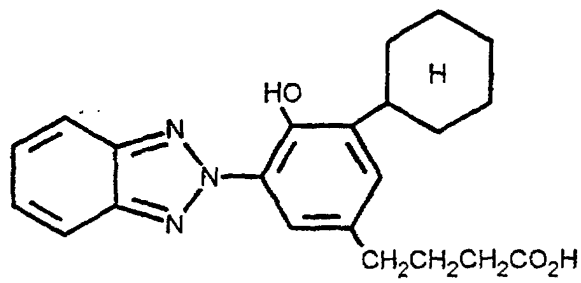

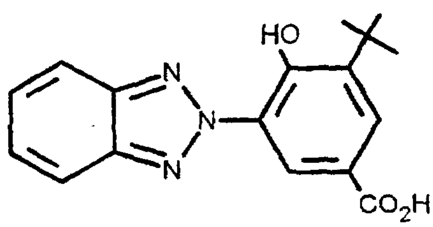

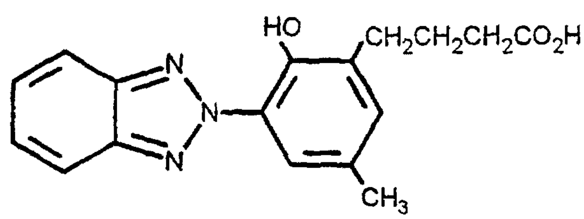

Die Verbindungen der Formel (1) sind entweder literaturbekannt oder nach literaturbekannten Verfahren erhältlich, beispielsweise gemäß dem in der EP-A 0 057 160 auf Seite 7 offenbarten Reaktionsschema. Diese Patentanmeldung wird als Referenz eingeführt und ist damit Gegenstand der Offenbarung der vorliegenden Erfindung ist.

Allgemein werden unter Epoxidgruppen enthaltenden Silanen Verbindungen verstanden, die zum einen mindestens einen Epoxidring besitzen und gleichzeitig Gruppen aufweisen, die unter Hydrolysebedingungen Silanol-Strukturen bilden.

Epoxisilane, wie sie erfindungsgemäß bevorzugt verwendet werden, sind z. B. in US-A 2 946 701 beschrieben. Sie sind Verbindungen der Formeln (2) oder (3):

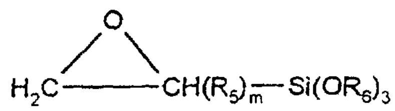

(2)

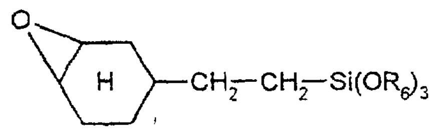

(3)

$R_5$ ist ein zweiwertiger Kohlenwasserstoffrest mit höchstens 9 Kohlenstoffatomen oder ein zweiwertiger Rest mit höchstens 9 Kohlenstoffatomen, bestehend aus C, H und O-Atomen, wobei das O-Atom als Etherbindungsrest vorliegt. Vorzugsweise ist

$$R_5 = -\ CH_2OCH_2CH_2CH_2-.$$

$R_6$ ist ein aliphatischer Kohlenwasserstoffrest mit höchstens 4 Kohlenstoffatomen, ein Acylrest mit höchstens 4 Kohlenstoffatomen oder ein Rest der Formel $(CH_2CH_2O)_nZ$, bei dem n mindestens 1 ist und Z ein aliphatischer Kohlenwasserstoffrest mit höchstens 4 Kohlenwasserstoffatomen bedeutet;

m ist 0 oder 1.

Die Herstellung dieser Epoxisilane ist ebenfalls in der US-A 2 946 701 beschrieben. Dieses Patent wird deshalb als Referenz eingeführt. Besonders bevorzugte Epoxisilane sind solche Verbindungen, in denen $R_6$ = Methyl ist. Sie sind kommerziell erhältlich, u. a. von den Firmen Union-Carbide und Hüls AG als:

| | |
|---|---|
| A-187 bzw. Dynasilan Glymo | 3-Glycidyloxypropyltrimethoxysilan |
| A-186 | 2-(3,4-Epoxycyclohexyl)ethyltrimethoxysilan |

Herstellung der UV-stabilisierenden Mischungen

Die Herstellung der UV-stabilisierenden Komponenten erfolgt durch ein homogenes Vermischen von Verbindungen der allgemeinen Formel (1) mit dem Epoxidgruppen enthaltenden hydrolysierbaren Silanen und Erhitzen dieser Mischung. Das Erhitzen sollte mindestens 30 min bei mindestens 90°C erfolgen. Vorzugsweise sollte dabei die Temperatur oberhalb 120°C liegen. Als besonders günstig hat sich ein Mischungsverhältnis herausgestellt, bei dem stöchiometrisch mehr Epoxidgruppen vorhanden sind als die $-R_3$-CO-$OR_4$-Gruppen des Hydroxybenztriazols der allgemeinen Formel 1. Das molare Verhältnis von Epoxi-Einheit des Silans zum Hydroxybenztriazol der allgemeinen Formel 1 sollte daher größer als 1,4, vorzugsweise größer als 2, besonders bevorzugt größer als 8 sein.

Die UV-stabilisierenden Komponenten müssen nicht unbedingt separat hergestellt werden, um dann dem zu stabilisierenden Siloxansystem hinzugesetzt zu werden, sondern können auch während der Synthese der Siloxan-Systeme/Siloxanbeschichtungsmaterialien als Teilschritt in situ synthetisiert werden.

Siloxan-Systeme / Siloxanbeschichtungsmaterialien

Die Siloxansysteme sind im wesentlichen thermisch aushärtende Systeme, die vorzugsweise durch Kondensationsreaktion zu -Si-O-Si-Verknüpfungen vernetzen. Parallel dazu können auch andere Vernetzungsmechanismen ablaufen. Derartige Systeme sind z. B. in den US-A3 790 527, 3 865 755, 3 887 514, 4 243 720, 4 278 804, 4 680 232,

4 006 271, 4 476 281, in den DE-A 4 011 045, 4 122 743, 4 020 316, 3 917 535, 3 706 714, 3 407 087, 3 836 815, 2 914 427, 3 135 241, 3 134 777, 3 100 532, 3 151 350, in den DE-A 3 005 541, 3 014 411, 2 834 606, 2 947 879, 3 016 021, 2 914 427 und 4 338 361 beschrieben und sind als Gegenstand der vorliegenden Offenbarung zu betrachten.

Ein weiterer Gegenstand der Erfindung sind deshalb erfindungsgemäß UV-stabilisierte Siloxansysteme.

Bevorzugt werden Siloxansysteme eingesetzt, die teilchenförmiges Material enthalten, das aus Oxiden, Oxidhydraten, Nitriden und Carbiden von Si, Al, Sb und B sowie von Übergangsmetallen, vorzugsweise Ti, Ce, Fe und Zr, ausgewählt ist und eine Teilchengröße im Bereich von 1 bis 100 nm, vorzugsweise 2 bis 50 nm aufweist.

Dem Siloxansystem soll soviel der erfindungsgemäßen UV-stabilisierenden Mischung bezogen auf den Feststoff des Siloxansystems zugegeben werden, daß der Anteil an Hydroxybenztriazol bezogen auf den Feststoff des Siloxansystems 0,3 bis 20, vorzugsweise 3 bis 15, besonders bevorzugt 5 bis 10 Gew.-% beträgt.

Für die Herstellung von kratzfesten Beschichtungssystemen und deren Komponenten auf Siloxanbasis wird durch Referenz auf die DE-A 2 914 427 und DE-A 4 338 361 verwiesen, die damit Gegenstand der vorliegenden Beschreibung sind.

## Substrate, Materialien

Die mit den erfindungsgemäßen UV-stabilisierenden Mischung versehenen Siloxansysteme können als Bulkmaterialien sowie als Beschichtungsmaterialien verwendet werden. Die Auswahl der Substratmaterialien zur Beschichtung ist uneingeschränkt. Vorzugsweise eignen sich diese UV-stabilisierten Beschichtungsmaterialien zur Beschichtung von Holz, Textilien, Papier, Steinwaren, Metallen, Glas, Keramik und Kunststoffen und dabei besonders zur Beschichtung von Thermoplasten, wie sie z.B. in Becker/Braun: Kunststoffhandbuch, Carl Hanser Verlag München, Wien, 1972 beschrieben sind. Ganz besonders geeignet sind sie für die Beschichtung von transparenten Thermoplasten und dabei vorzugsweise von Polycarbonaten.

Für Beschichtungszwecke werden die üblichen Beschichtungsverfahren angewandt, z.B. Tauchen, Fluten, Gießen, Schleudern, Spritzen oder Aufstreichen.

Die Beschichtung wird in Schichtdicken von z.B. 2 bis 200 µm, vorzugsweise 2 bis 30 µm und besonders bevorzugt 5 bis 15 µm aufgetragen. Gegebenenfalls kann das Substrat vor der Aufbringung der Beschichtung mit einer Haftvermittler- oder Primerschicht grundiert werden.

Die Aushärtung der Lacke erfolgt vorzugsweise bei Temperaturen >90°C.

Thermoplastische, aromatische Polycarbonate im Sinne der vorliegenden Erfindung sind sowohl Homopolycarbonate als auch Copolycarbonate, die Polycarbonate können in bekannter Weise linear oder verzweigt sein.

Ein Teil, bis zu 80 Mol-%, vorzugsweise von 20 Mol-% bis zu 50 Mol-%, der Carbonat-Gruppen in den geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen unter dem Oberbegriff der thermoplastischen, aromatischen Polycarbonate subsummiert werden.

Einzelheiten der Herstellung von Polycarbonaten sind in Hunderten von Patentschriften seit etwa 40 Jahren niedergelegt. Beispielhaft sei hier nur auf "Schnell, Chemistry and Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(ester Carbonate) Copolymers" in Journal of Polymer Science, Polymer Chemistry Edition, Vol. 19, 75-90 (1980), auf D. Freitag, U. Grigo, P. R. Müller, N. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kircher und P. R. Müller "Polycarbonate" in Becker /Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate haben mittlere Molekulargewichte $\overline{M}_w$ (ermittelt durch Messung der relativen Viskosität bei 25°C in $CH_2Cl_2$ und einer Konzentration von 0,5 g pro 100 ml $CH_2Cl_2$) von 12 000 bis 400 000, vorzugsweise von 18 000 bis 80 000 und insbesondere von 22 000 bis 60 000.

Gegenstand der vorliegenden Erfindung sind demnach auch beschichtete Materialien, vorzugsweise Polycarbonat und besonders bevorzugt kratzfest beschichtetes Polycarbonat.

**Beispiele**

**Beispiel I:**

a) UV-absorbierende Ausgangsprodukte

a1) 2-(2-Hydroxy-3-tert-butyl-5(2-carboxyethyl)-phenyl)-benztriazol FP 195 °C (Herstellung analog EP 0 057 160 Bsp.1)

a2) 2-(2-Hydroxy-3-cyclohexyl-5(3-carboxypropyl)-phenyl)-benztriazol

α) 132 g (0,75 mol) 2-Cyclohexylphenol werden in 800 ml trockenem Chlorbenzol gelöst, Dann gibt man bei 5 bis 10 °C 200 g (1.5 mol) $AlCl_3$ hinzu und anschließend bei 0 bis 10°C eine Lösung von 73,5 g (0,75 mol) Maleinsäureanhydrid in 400 ml Chlorbenzol. Nach 12 Stunden bei Raumtemperatur gießt man auf Eiswasser und säuert mit konzentrierter HCl an Man erhält 85 g eines Pulvers mit dem Fp. 187 bis 190°C.

β) 34,5 g (0,25 mol) o-Nitroanilin werden in 300 ml Wasser und 69 ml konzentrierter HCI verrührt. Dann tropft man bei 5°C eine Lösung von 17,3 g (0,25 mol) Natriumnitrit in 155 ml Wasser hinzu. Diese Lösung wird anschließend bei 5°C zu einer Lösung von 68,5 g (0,25 mol) der Verbindung α und 79,5 g (0,75 mol) Natriumcarbonat in 1 Liter Wasser getropft. Man erhält 117 g eines Feststoffs mit dem Fp. 155°C.

γ) 42,5 g (0,1 mol) des Azofarbstoffs β werden mit 200 ml 2 n NaOH versetzt. Dann fügt man 50 g Zinkstaub hinzu und läßt innerhalb einer Stunde 80 ml 10 n NaOH zufließen, so daß die Temperatur unter 45°C bleibt. Anschließend erhitzt man vier Stunden auf 90°C, filtriert und säuert das Filtrat mit HCI an.

Nach dem Umkristallisieren aus Cyclohexan resultieren 31 g 2-(2-Hydroxy-3-cyclohexyl-5-(3-carboxypropyl)-phenyl)-benztriazol als farblose Kristalle vom Fp. 165°C.

b) UV-stabilisierende Komponente aus a1 und 3-Glycidyloxy-propyltrimethoxysilan (Glymo)

50 g a1 und 450 g 3-Glycidyloxypropyltrimethoxysilan werden vorgelegt und unter Stickstoff-Beschleierung und Rühren auf 140 - 150°C aufgeheizt und bei dieser Temperatur eine Stunde gehalten.

Folgende Variationen wurden von dieser Mischung (Mischung 1) durchgeführt:

Mischung:

| | | |
|---|---|---|
| 2 | 100 g a1 | 400 g Glymo |
| 3 | 150 g" | 350 g " |
| 4 | 200 g " | 300 g " |
| 5 | 100 g " | 400 g α-(3,4-epoxicyclohexyl)ethyltrimethoxysilan) |

c) Herstellung des Siloxanbeschichtungsmaterials nach DE-A 2 914 427 (Beschichtungssol I)

α) Zu 300 g kolloidaler Kieselsäure mit 30 Gew.-% $SiO_2$-Gehalt werden 19,8 g Eisessig, 210 g destilliertes Wasser und 227 g Isopropanol gegeben. Nach gründlicher Durchmischung werden 900 g Methyltriethoxysilan zugesetzt und die Mischung unter Rühren auf 60°C erwärmt. Man beläßt die Mischung 4 Stunden lang bei dieser Temperatur und fügt anschließend weitere 1200 g Isopropanol zur Mischung hinzu Nach Abkühlen des Produkts auf Raumtemperatur wird die schwach opake Lösung filtriert.

β) In einem mit Rührer und Rückflußkühler versehenen Gefäß werden 340 g Isopropanol, 190 g Tetraethoxysilan und 360 g Methyltriethoxysilan vorgelegt. Dieses Gemisch wird mit 180 g 0,05 n Salzsäure versetzt und zur Durchführung der Cohydrolyse fünf Stunden unter Rückfluß erwärmt. Nach der Umsetzung wird das Gemisch auf Raumtemperatur abgekühlt. Es resultiert eine Lösung, die ein Teilhydrolysat von Tetraethoxysilan (5,1 %, berechnet als $SiO_2$) und Teilhydrolysat von Methyltriethoxysilan (12,6 %, berechnet als $CH_3SiO_{1,5}$) enthält.

Vor Verwendung als Beschichtungsmaterial werden die beiden Komponenten α) und β) im Verhältnis 1:1 miteinander vermischt und in einer Mischung aus 60 Gewichtsteilen n-Butanol, 40 Gew.-Teilen Essigsäure und 20 Gew.-Teilen Toluol gelöst.

d) Herstellung eines Siloxanbeschichtungsmaterials nach DE-A 4 338 361 (Beschichtungssol II)

Zur Herstellung eines Böhmitsols wurden 12,82 g Essigsäure-stabilisiertes (6,4 Gew.-% Essigsäure) Böhmitpulver mit 104,62 g 0,1 n HCl versetzt. Durch anschließende Ultraschall-Behandlung (20 Minuten) entsteht eine transparente, farblose Lösung, von der 24,3 g mit einer Mischung aus 118,17 g GPTS (3 Glycidyloxypropyl-trimethoxy-silan) und 62,50 g TEOS (Tetraethyl Orthosilicat) versetzt wurde. Die Reaktionsmischung wurde 2 Stunden lang bei Raumtemperatur gerührt und anschließend unter Eiskühlung mit 18,93 g Aluminiumtributoxyethanolat versetzt. Das resultierende klare Sol wurde 2 Stunden bei Raumtemperatur gerührt und dann unter Eiskühlung mit 93,14 g des obigen Böhmitsols und 79,30 g Butoxyethanol versetzt.

e) UV-stabilisierte Beschichtungssole I und II

Es wurden zu jeweils 1000 g des Beschichtungssoles I und II jeweils 60 g der erfindungsgemäßen UV-stabilisierenden Mischung 2 hinzugegeben. Mit diesen Zusammensetzungen wurden Quarzgläser beschichtet und die UV-Lichttransmission mit einem Beckmann DU 70 Fotometer im Wellenlängenbereich von 250 bis 600 nm gemessen. Die Schichtdicke betrug 5 μm und absorbierte >98 % der für Polycarbonat kritischen Strahlung mit einer Wellenlänge <350 nm.

Beschichten von Substraten und Prüfung der Eigenschaften der Beschichtungen

Platten aus Polycarbonat auf Basis Bisphenol A (Tg = 147°C, $M_w$ 27 500) mit den Maßen 105 x 150 x 4 mm) wurden mit Isopropanol gereinigt und durch Tauchen in eine Mischung aus 3 Gew.-% Ammiopropyltrimethoxysilan und 97 Gew.-% Butylglykol mit anschließender 0,5-stündiger Temperaturbehandlung bei 130°C geprimert. Anschließend wurden die Platten jeweils in Beschichtungssole I oder II bei einer Tauchgeschwindigkeit V = 100 cm/min mit einer Lackschicht von 20 μm beschichtet. Nach 10 min Ablüften bei Raumtemperatur wurden die beschichteten Platten 1 h bei 130°C getrocknet. Die Schichtdicke der Kratzfestlacke betrug nach Trocknung ca. 5 μm. Die beschichteten Platten wurden nach erfolgter Aushärtung 2 Tage bei Raumtemperatur gelagert und dann einer definierten UV-Belichtung unterzogen.

UV-Belichtungsprüfung

Die Beanspruchung der lackierten Polycarbonatplatten erfolgte durch gefilterte Xenonbogenstrahlung mit einem Beregnungszyklus gemäß DIN 53387-1-A-X unter folgenden Prüfbedingungen:

| | |
|---|---|
| Bewitterungsgerät | Xenon - WOM |
| Bestrahlungsstärke bei 340 nm | 0,35 $W/m^2$ (vorzugsweise) |
| Filterkombination | Innen: Pyrex Außen: Pyrex |
| Schwarztafeltemperatur | 60°C ± 5°C |
| Schwarzstandardtemperatur | 65°C ± 3°C |
| Betriebsweise | Gleichlauf |
| Beregnungszyklus | 102 : 18 |
| Relative Luftfeuchte | 60 - 80 % |

Als Kriterium für die Witterungsstabilität der lackierten Platten wurde die Vergilbung in Abhängigkeit der Belichtungszeit herangezogen. Der entsprechende Gelbwert der Platten wurde nach ASTM D 1925 - 70 als Yellowness Index : Y.I. bestimmt.

| Y.I.-Werte nach Xenon-WOM 102:18 Bewitterung | | | | | |
|---|---|---|---|---|---|
| Proben | 0 h | 1 000 h | 2 000 h | 3 000 h | 5 000 h |
| Polycarbonat mit UV-stabil. Beschichtungssol I, gemäß Mischung 2 | 2,1 | 2,2 | 2,7 | 2,8 | 4,3 |
| Polycarbonat mit UV-stabil. Beschichtungssol II, gemäß Mischung 2 | 2,5 | 2,7 | 3,2 | 3,3 | 4,8 |
| **Vergleich** | | | | | |
| Polycarbonat mit Beschichtungssol I ohne UV-Stabilisierung | 1,8 | 2,2 | 6,4[a)] | 7,6[a)] | - [b)] |
| Polycarbonat mit Beschichtungssol II ohne UV-Stabilisierung | 1,9 | 2,6 | 6,3 [a)] | 7,9[a)] | - [b)] |

a) Risse, Delaminierung der Lackschicht.

b) Keine Lackschicht mehr vorhanden.

## Patentansprüche

**1.** UV-Stabilisator-Mischung, enthaltend

A) Hydroxybenztriazol gemäß der allgemeinen Formel (1)

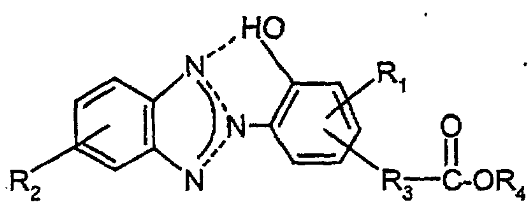

(1)

$R_1$: H, $C_1$-$C_{18}$-Alkyl, $C_5$-$C_6$-Cycloalkyl oder $C_6$-$C_{12}$-Aryl,

$R_2$: H, Halogen, vorzugsweise Cl oder $C_1$-$C_{12}$-Alkyl,

$R_3$: eine Einfachbindung, $C_1$-$C_{12}$-Alkylen, $C_5$-$C_6$-Cycloalkylen oder Phenylen,

$R_4$: H, Alkalimetall, Ammonium, Erdalkalimetall, $C_1$-$C_{12}$-Alkyl,

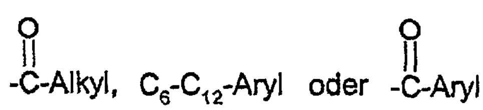

und

B) Epoxidgruppen enthaltende, hydrolysierbare Silane der Formeln (2) oder (3)

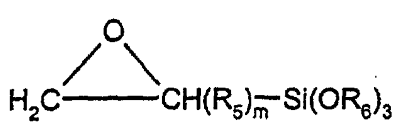

(2)

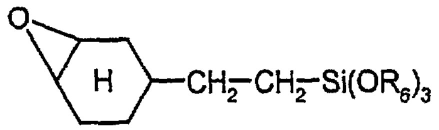 (3)

worin

$R_5$ ein zweiwertiger Kohlenwasserstoffrest mit höchstens 9 Kohlenstoffatomen oder ein zweiwertiger Rest mit höchstens 9 Kohlenstoffatomen, bestehend aus C, H und O-Atomen, wobei das O-Atom als Etherbindungsrest vorliegt, ist, und

$R_6$ ein aliphatischer Kohlenwasserstoffrest mit höchstens 4 Kohlenstoffatomen, ein Acylrest mit höchstens 4 Kohlenstoffatomen oder ein Rest der Formel $(CH_2CH_2O)_nZ$, bei dem n mindestens 1 ist und Z ein aliphatischer Kohlenwasserstoffrest mit höchstens 4 Kohlenwasserstoffatomen bedeutet, ist, und

m 0 oder 1 ist.

**2.** UV-Stabilisator-Mischung gemäß Anspruch 1, **dadurch gekennzeichnet, dass** das molare Verhältnis von Epoxidgruppen des Silans zum Hydroxybentiazol der allgemeinen Formel (1) größer als 1,4 ist.

**3.** UV-Stabilisator-Mischung gemäß Anspruch 1 oder 2, **dadurch gekennzeichnet, dass** als Hydroxybenztriazol der allgemeinen Formel (1) eines oder mehrere der folgenden Hydroxybenztriazole verwendet werden:

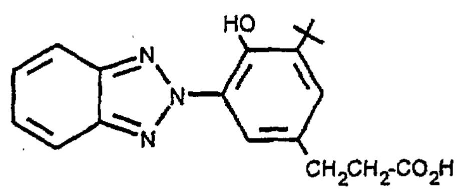

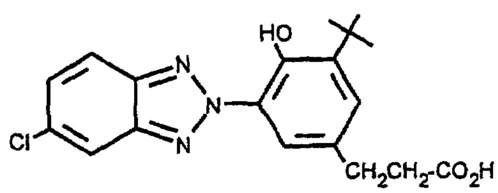

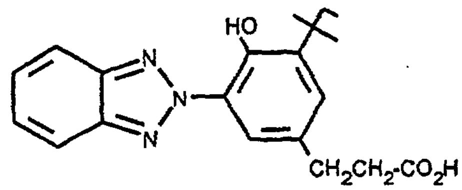

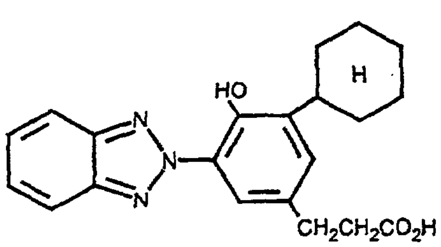

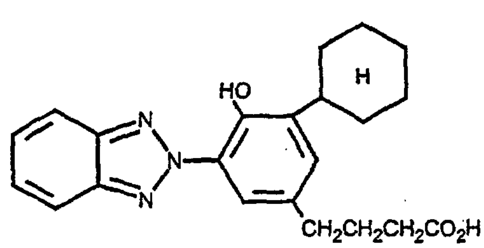

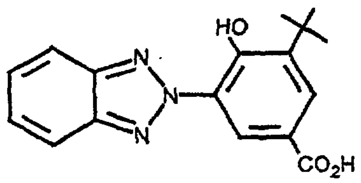 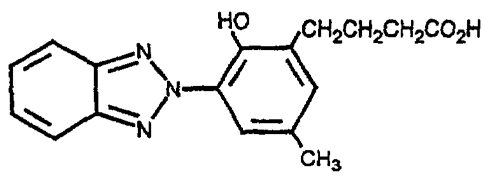

4. Verfahren zur Herstellung einer UV-Stabilisator-Mischung gemäß einem der Ansprüche 1-3, **dadurch gekennzeichnet, dass** man das Hydroxybenztriazol der allgemeinen Formel (1) und die Epoxidgruppen enthaltenden, hydrolysierbaren Silane vermischt und mindestens 30 min auf mindestens 90°C erhitzt.

5. Siloxan-System enthaltend UV-Stabilisator-Mischung gemäß einem der Ansprüche 1-3.

6. Siloxan-System enthaltend eine UV-Stabilisator-Mischung erhalten gemäß Anspruch 4.

7. Siloxan-System gemäß Anspruch 5 oder 6, **dadurch gekennzeichnet, dass** der Anteil an Hydroxybenztriazol bezogen auf den Feststoff des Siloxansystems 0,3 bis 20 beträgt.

8. Siloxanbeschichtungsmaterial, enthaltend Siloxansystem gemäß einem der Ansprüche 5 bis 7 und gegebenenfalls teilchenförmiges Material, bestehend aus einer Verbindung ausgewählt aus der Gruppe gebildet aus Oxiden, Oxidhydraten, Nitriden und Carbiden von Si, Al, Sb und B sowie von Übergangsmetallen, vorzugsweise Ti, Ce, Fe und Zr, wobei das Material eine Teilchengröße im Bereich von 1 bis 100 nm aufweist.

9. Verwendung des Siloxanbeschichtungsmaterials gemäß Anspruch 8 zur Beschichtung von Substratmaterialien jeglicher Art, vorzugsweise von Thermoplasten, besonders bevorzugt von Polycarbonaten.

10. Beschichtetes Material, vorzugsweise Polycarbonat, **dadurch gekennzeichnet, dass** zumindestens die der Strahlung ausgesetzten Oberflächen des Materials mit einem Siloxanbeschichtungsmaterial gemäß Anspruch 8 beschichtet ist.

## Claims

1. UV-stabiliser mixture containing

A) hydroxybenzotriazole according to the general formula (1):

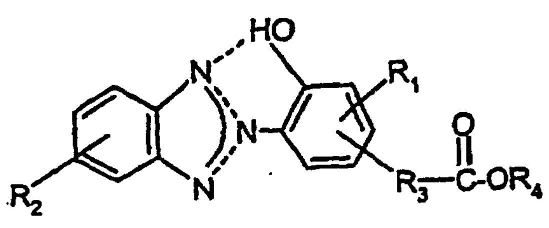 (1)

$R_1$: H, $C_1$-$C_{18}$ alkyl, $C_5$-$C_6$ cycloalkyl or $C_6$-$C_{12}$ aryl,

$R_2$: H, halogen, preferably Cl, or $C_1$-$C_{12}$ alkyl,

$R_3$: a single bond, $C_1$-$C_{12}$ alkylene, $C_5$-$C_6$ cycloalkylene or phenylene,

$R_4$: H, alkali metal, ammonium, alkaline earth metal, $C_1$-$C_{12}$ alkyl,

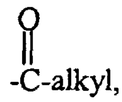, $C_6$-$C_{12}$ aryl or 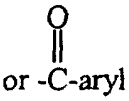

and

B) hydrolysable silanes containing epoxy groups of the formulae (2) or (3)

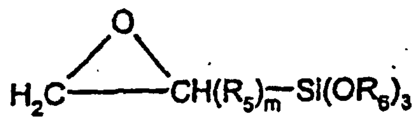 (2)

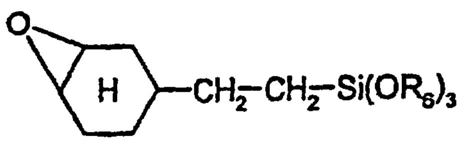 (3)

in which

$R_5$ is a divalent hydrocarbon residue having at most 9 carbon atoms or a divalent residue having at most 9 carbon atoms consisting of C, H and O atoms, wherein the O atom is present as an ether bond residue, and

$R_6$ is an aliphatic hydrocarbon residue having at most 4 carbon atoms, an acyl residue having at most 4 carbon atoms or a residue of the formula $(CH_2CH_2O)_nZ$, in which n is at least 1 and Z means an aliphatic hydrocarbon residue having at most 4 carbon atoms, and

m is 0 or 1.

2. UV-stabiliser mixture according to claim 1, **characterised in that** the molar ratio of epoxy goups of the silane to the hydroxybenzotriazole of the general formula (1) is greater than 1.4.

3. UV-stabiliser mixture according to claim 1 or 2, **characterised in that** one or more of the following hydroxybenzotriazoles are used as the hydroxybenzotriazole of the general formula (1):

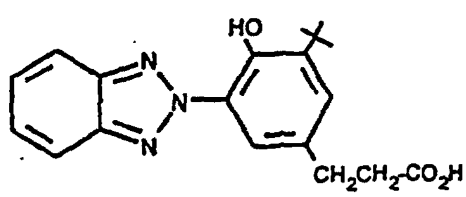

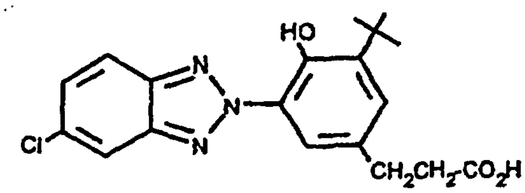
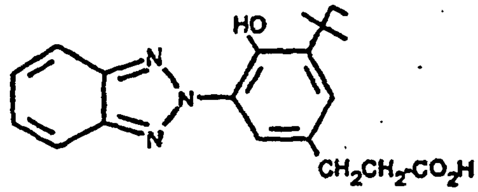
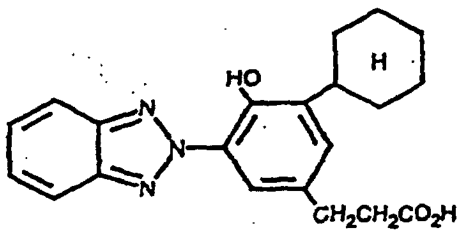
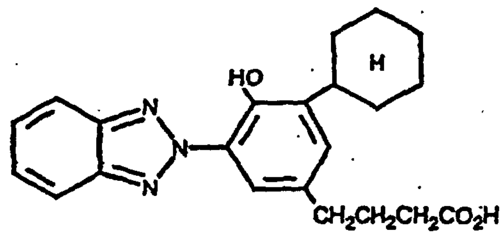
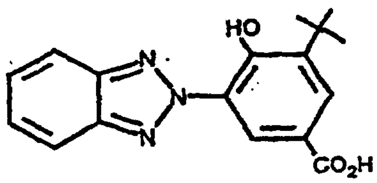
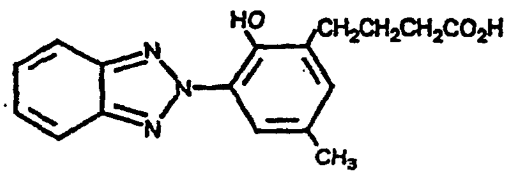

4. Process for the production of a UV-stabiliser mixture according to any one of claims 1-3, **characterised in that** the hydroxybenzotriazole of the general formula (1) and the hydrolysable silanes containing epoxy groups are mixed and heated to at least 90°C for at least 30 minutes.

5. Siloxane system containing a UV-stabiliser mixture according to any one of claims 1 to 3.

6. Siloxane system containing a UV-stabiliser mixture obtained according to claim 4.

7. Siloxane system according to claim 5 or 6, **characterised in that** the proportion of hydroxybenzotriazole relative to the solids content of the siloxane system is 0.3 to 20.

8. Siloxane coating material containing a siloxane system according to any one of claims 5 to 7 and optionally particulate material consisting of a compound selected from the group consisting of oxides, oxide hydrates, nitrides and carbides of Si, Al, Sb and B and of transition metals, preferably Ti, Ce, Fe and Zr, wherein the material has a particle size in the range from 1 to 100 nm.

9. Use of the siloxane coating material according to claim 8 for coating substrate materials of any kind, preferably thermoplastics, particularly preferably polycarbonates.

10. Coated material, preferably polycarbonate, **characterised in that** at least the surfaces of the material exposed to radiation are coated with a siloxane coating material according to claim 8.

**Revendications**

1. Mélange stabilisant anti-U.V., contenant :

A) des hydroxybenzotriazoles suivant la formule générale (1) :

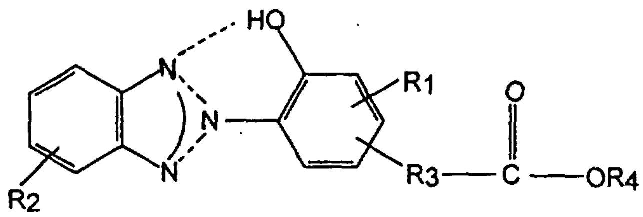 (I)

$R_1$ : H, alcoyle en $C_1$-$C_{18}$, cycloalcoyle en $C_5$-$C_6$ ou aryle en $C_6$-$C_{12}$ ;
$R_2$ : H, halogène, de préférence Cl ou alcoyle en $C_1$-$C_{12}$ ;
$R_3$ : une simple liaison, alcoylène en $C_1$-$C_{12}$, cycloalcoylène en $C_5$-$C_6$, ou phénylène ;
$R_4$ : H, métal alcalin, ammonium, métal alcalino-terreux, alcoyle en $C_1$-$C_{12}$, -CO-alcoyle, aryle en $C_6$-$C_{12}$ ou -CO-aryle, et

B) des silanes hydrolysables, contenant des radicaux époxyde, de formule (2) ou (3) :

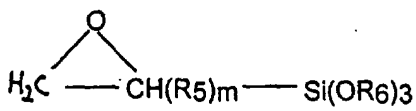 (2)

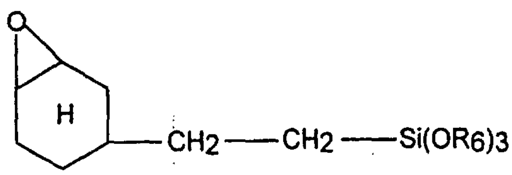 (3)

$R_5$ est un reste hydrocarboné bivalent avec au plus 9 atomes de carbone ou un reste bivalent avec au plus 9 atomes consistant en les atomes C, H et O, où l'atome O est présent sous forme d'un reste de liaison éther, et
$R_6$ est un reste hydrocarboné aliphatique avec au plus 4 atomes de carbone, un reste acyle avec au plus 4 atomes de carbone ou un reste de formule $(CH_2CH_2O)_nZ$, dans lequel n est au moins 1 et Z représente un reste hydrocarboné aliphatique avec au plus 4 atomes de carbone ;
m est 0 ou 1.

**2.** Mélange stabilisant anti-U.V. suivant la revendication 1, **caractérisé en ce que** le rapport molaire des radicaux époxyde du silane à l'hydroxybenzotriazole de formule générale (1) est supérieur à 1,4.

**3.** Mélange stabilisant anti-U.V. suivant la revendication 1 ou 2, **caractérisé en ce que** comme hydroxybenzotriazole de formule générale (1), on utilise l'un ou plusieurs des hydroxybenzotriazoles suivants :

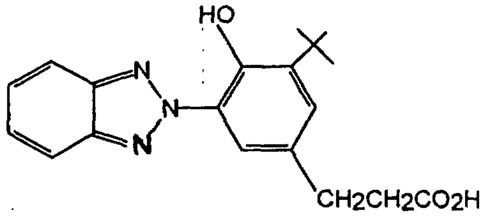

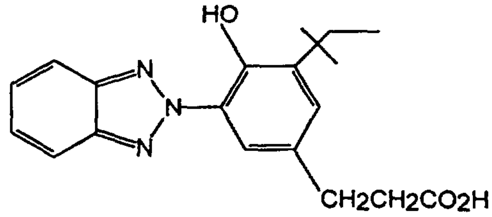

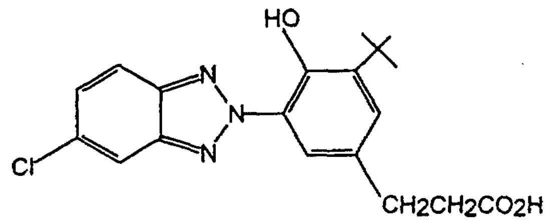

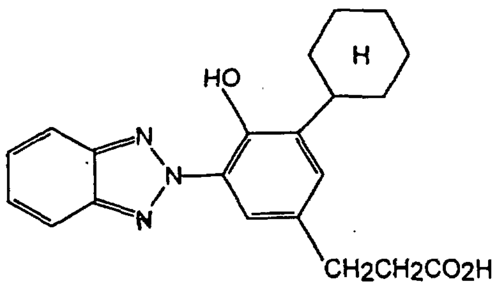

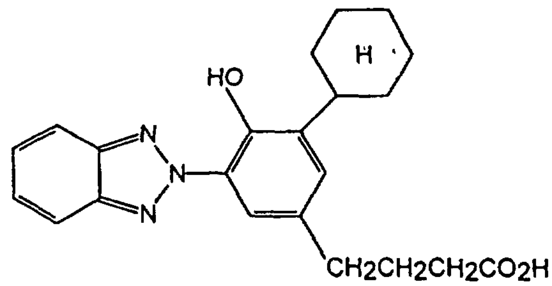

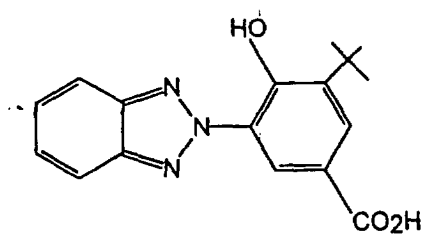

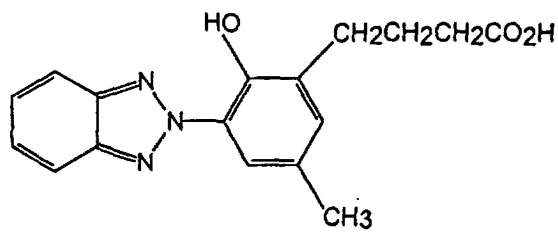

**4.** Procédé de préparation d'un mélange stabilisant anti-U.V. suivant l'une quelconque des revendications 1 à 3, **caractérisé en ce que** l'on mélange l'hydroxybenzotriazole de formule générale (1) et le silane hydrolysable, contenant des radicaux époxyde et on chauffe pendant au moins 30 minutes à au moins 90°C.

**5.** Système à base de siloxane contenant un mélange stabilisant anti-U.V. suivant l'une quelconque des revendications 1 à 3.

**6.** Système à base de siloxane contenant un mélange stabilisant anti-U.V. obtenu suivant la revendication 4.

**7.** Système à base de siloxane suivant la revendication 5 ou 6, **caractérisé en ce que** la part d'hydroxybenzotriazole se situe dans l'intervalle allant de 0,3 à 20, sur base du solide du système à base de siloxane.

**8.** Matériau d'enduction au siloxane, contenant le système à base de siloxane suivant l'une quelconque des revendications 5 à 7, et le cas échéant, un matériau particulaire consistant en un composé choisi parmi le groupe formé des oxydes, oxyhydrates, nitrures et carbures de Si, Al, Sb et B ainsi que des métaux de transition, de préférence Ti, Ce, Fe et Zr, où le matériau présente une taille des particules située dans l'intervalle allant de 1 à 100 nm.

**9.** Utilisation du matériau d'enduction au siloxane suivant la revendication 8, pour le revêtement de matériaux de substrat de type quelconque, de préférence de thermoplastiques, de manière particulièrement préférée de polycarbonates.

**10.** Matériau enduit, de préférence un polycarbonate, **caractérisé en ce qu'**au moins la face exposée au rayonnement du matériau est enduite d'un matériau d'enduction au siloxane suivant la revendication 8.